# FASCICULE DE BREVET EUROPEEN

(11) **EP 1 538 312 B1**
(45) Date de publication et mention de la délivrance du brevet: **07.03.2007**
(21) Numéro de dépôt: 04300797.0
(22) Date de dépôt: 16.11.2004
(51) Int. Cl.: F01N 3/08, F01N 3/20, F01N 3/22

(54) **Procédé de traitement des hydrocarbures imbrulés issus d'un moteur à allumage commandé fonctionnant au gaz naturel et dispositif d'application de ce procédé**
Verfahren zur Behandlung von unverbrannten Kohlenwasserstoffen aus einem mit Erdgas betriebenen fremdgezündeten Verbrennungsmotor sowie eine Vorrichtung zur Anwendung dieses Verfahrens
Method of treating unburned hydrocarbons emitted by a spark ignition combustion engine running on natural gas as well as a device to apply said method

(30) Priorité: 18.11.2003 FR 0313480
(43) Date de publication de la demande: 08.06.2005
(73) Titulaire: Peugeot Citroen Automobiles, 78140 Velizy-Villacoublay (FR)
(72) Inventeur: Lendresse, Yvane, 92500 Rueil Malmaison (FR)
(74) Mandataire: De Cuenca, Emmanuel Jaime

(56) Documents cités:
- EP-A- 0 561 311
- EP-A- 1 020 620
- DE-A- 19 750 178
- DE-U- 9 109 004
- US-A- 5 972 299
- US-B1- 6 253 544
- PATENT ABSTRACTS OF JAPAN vol. 017, no. 074 (M-1366), 15 février 1993 (1993-02-15) & JP 04 276167 A (MASAYUKI YOKOTA), 1 octobre 1992 (1992-10-01)
- ECOPOINT INC.: "Emission Control Catalysts" DIESELNET.COM, [Online] novembre 2000 (2000-11), Extrait de l'Internet: URL:http://www.dieselnet.com/tech/cat_top. html> [extrait le 2004-12-22]

## Description

La présente invention concerne un procédé de traitement des polluants issus de la combustion d'un moteur à allumage commandé fonctionnant au gaz naturel, destiné notamment à optimiser l'oxydation des composés hydrocarbonés notamment de type méthanique lorsque le convertisseur catalytique n'est pas amorcé. Elle s'applique en particulier à un moteur de véhicule automobile.

Les polluants issus de la combustion d'un moteur à allumage commandé fonctionnant au gaz naturel sont majoritairement des hydrocarbures imbrûlés de type méthanique CH4, des oxydes d'azote NOx (monoxyde d'azote NO et dioxyde d'azote NO2) et des oxydes de carbone (monoxyde de carbone CO et dioxyde de carbone CO2). Afin de respecter les normes environnementales internationales, la maîtrise des émissions des hydrocarbures, du monoxyde de carbone et des oxydes d'azote est impérative aussi bien à neuf qu'en endurance et des technologies de post-traitement sont indispensables.

La maîtrise des émissions polluantes en phase gaz peut être obtenue par introduction dans la ligne d'échappement de catalyseurs spécifiques comme les catalyseurs trois-voies dits catalyseurs tri-fonctionnels, afin de respecter la réglementation relative aux oxydes d'azote NOx (fonction réductrice du catalyseur généralement obtenue par le rhodium), la réglementation relative au CO (fonction oxydante du catalyseur généralement obtenue par le platine) et la réglementation relative aux hydrocarbures imbrûlés (maîtrisés généralement par interaction avec le palladium).

Bien que l'utilisation du gaz naturel pour faire fonctionner un moteur à allumage commandé conduise à une réduction significative des émissions d'hydrocarbures imbrûlés à la sortie du moteur (entre 50 et 75% par rapport à un moteur essence à iso-cylindrée et sur des points moteur stabilisés), ces hydrocarbures émis sont de type méthanique et donc très difficilement oxydables du fait de leur forte stabilité physico-chimique. La conséquence directe de l'excellente stabilité de la molécule de méthane est que, à iso-formulation catalytique, la température de demi-conversion pour les hydrocarbures, c'est à dire la température à laquelle la moitié de ces hydrocarbures présents dans les gaz d'échappement est oxydée, est augmentée de 200°C environ par rapport à la température de demi-conversion des hydrocarbures issus d'un même moteur fonctionnant à l'essence. De plus, les températures des gaz d'échappement sont de 20°C environ plus faibles pour un moteur fonctionnant au gaz naturel que pour un moteur à essence. L'oxydation des hydrocarbures imbrûlés issus d'un moteur à allumage commandé fonctionnant au gaz naturel a donc lieu à une température relativement élevée alors que les gaz d'échappement sortent du moteur à une température relativement plus basse.

Pour augmenter la température des gaz d'échappement d'un moteur à allumage commandé fonctionnant au gaz naturel, des stratégies spécifiques de chauffage du catalyseur en dégradant l'avance à l'allumage peuvent être appliquées principalement au cours de la phase de démarrage à froid du véhicule, ou des isolements améliorés de ligne d'échappement ou encore en modifiant l'architecture de la ligne d'échappement de façon à rapprocher les briques catalytiques le plus près possible de la sortie du moteur. Le couplage de ces différentes stratégies permet une amélioration sensible des températures d'amorçage des catalyseurs tri-fonctionnels mais pas suffisamment pour envisager les futures normes.

Ces stratégies de contrôle moteur peuvent être couplées à des formulations catalytiques spécifiques pour les moteurs au gaz naturel. Pour cela, les fournisseurs de catalyseurs proposent d'augmenter de façon très significative la charge en métaux précieux des catalyseurs trois-voies (par exemple, d'environ 1,4 grammes de métaux par litre de catalyseur jusqu'à environ 10,6 grammes de métaux par litre de catalyseur pour les applications gaz naturel) pour abaisser la température de demi-conversion des hydrocarbures de type méthanique et maintenir une performance compatible avec les futures réglementations concernant l'endurance. Cette augmentation de la charge en métaux précieux est également couplée à des définitions de supports catalytiques différents tendant vers une augmentation significative des densités de cellules avec une réduction des épaisseurs de parois. La conséquence de ces évolutions est une fragilisation significative des matériaux catalytiques impactant significativement et de façon négative la mise de ceux-ci dans leur boîtier ou canning.

Cependant, de tels catalyseurs ne commencent à fonctionner que lorsque la température des gaz atteint la température d'amorçage du catalyseur.

Par ailleurs, il est connu du document EP1020620 un dispositif capable de produire et d'introduire de l'ozone dans la ligne d'échappement d'un moteur à combustion interne en amont du convertisseur catalytique. Toutefois, cette ligne d'échappement ne comporte pas de moyens capables de mesurer la température dans la ligne d'échappement et de commander, en fonction de ladite température, l'arrêt ou le fonctionnement du dispositif qui produit et introduit l'ozone.

C'est pourquoi, l'invention a pour but un procédé de traitement des hydrocarbures imbrûlés notamment de type méthanique, d'un moteur à allumage commandé fonctionnant au gaz naturel, notamment pour véhicule automobile, susceptible d'oxyder les hydrocarbures imbrûlés dès le démarrage à froid du moteur.

Selon l'invention, ce procédé consiste, en dessous d'un certain seuil de température des gaz circulant dans la ligne d'échappement du moteur, à injecter dans la ligne d'échappement un mélange gazeux contenant notamment de l'ozone afin d'oxyder ces hydrocarbures imbrûlés et, au-dessus de ce seuil, à traiter ceux-ci au moyen d'un convertisseur catalytique.

De préférence, ce seuil correspond à la température de demi-conversion du méthane.

L'invention a pour but également un dispositif d'application du procédé, caractérisé en ce qu'il comporte au moins un convertisseur catalytique dans la ligne d'échappement du moteur et un capteur de température en amont de ce convertisseur , une ligne d'admission d'air parallèle à la ligne d'échappement du moteur et comportant une pompe à air et un dispositif d'ionisation d'air, des moyens d'injection permettant d'introduire dans la ligne d'échappement le mélange gazeux issu du dispositif d'ionisation d'air ainsi que des moyens de contrôle du fonctionnement de la pompe à air, du dispositif d'ionisation et des moyens d'injection en fonction de la température mesurée par le capteur.

Selon d'autres caractéristiques :
Les moyens de contrôle commandent la mise en fonctionnement de la pompe à air, du dispositif d'ionisation d'air et des moyens d'injection, lorsque la température mesurée par le capteur est en dessous d'un certain seuil.
Les moyens de contrôle commandent l'arrêt de la pompe à air, du dispositif d'ionisation d'air et des moyens d'injection, lorsque la température mesurée par le capteur est au-dessus dudit seuil.

De préférence, ce seuil de température correspond à la température de demi-conversion du méthane.

Les moyens d'injection peuvent communiquer avec la ligne d'échappement en amont ou bien en aval du convertisseur catalytique.

Le dispositif d'ionisation d'air peut être constitué de plusieurs réacteurs placés en série dans la ligne d'admission d'air.

Le dispositif selon l'invention peut comporter en outre un dispositif d'ionisation de gaz placé dans la ligne d'échappement et des moyens de contrôle du fonctionnement de celui-ci. Ceux-ci peuvent être indépendants des moyens de contrôle du dispositif d'ionisation d'air.

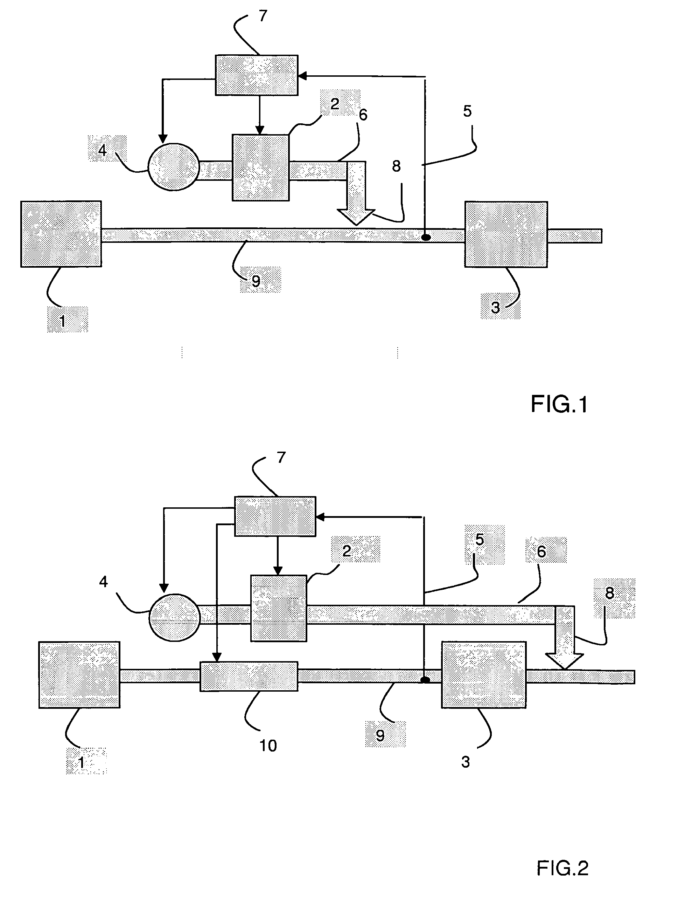

L'invention sera mieux comprise à la lecture de la description des modes de réalisation représentés sur les figures 1 et 2, et donnés uniquement à titre d'exemples. Sur les deux figures, les éléments correspondants portent les mêmes repères.

La figure 1 représente un dispositif selon selon l'art antérieur, dans lequel les moyens d'injection permettant d'introduire dans la ligne d'échappement le mélange gazeux issu du dispositif d'ionisation d'air sont en amont du convertisseur catalytique.

La figure 2 représente un dispositif selon l'invention, dans une figure analogue à la figure 1, mais dans laquelle les moyens d'injection sont en aval du convertisseur catalytique et dans laquelle un dispositif d'ionisation de gaz a été introduit dans la ligne d'échappement.

Le dispositif représenté sur la figure 1 comporte, dans une ligne d'admission d'air ionisé 6, parallèle à la ligne d'échappement 9 d'un moteur 1 à allumage commandé fonctionnant au gaz naturel, de préférence à la stoechiométrie, un dispositif d'ionisation d'air 2 alimenté par un système haute tension non représenté délivrant des impulsions de courant modulables (amplitude, durée, fréquence) et une pompe à air 4 permettant d'acheminer l'air au dispositif d'ionisation 2. Des moyens d'injection 8 permettent d'introduire le mélange gazeux issu du dispositif d'ionisation d'air 2 dans la ligne d'échappement 9. Celle-ci comporte un convertisseur catalytique, par exemple un catalyseur trois-voies 3 et un capteur de température 5 placé en amont du catalyseur trois-voies 3. Un calculateur 7 reçoit des informations du capteur de température 5 et en sortie, est adapté pour piloter la pompe à air 4, le fonctionnement du dispositif d'ionisation d'air 2 et les moyens d'injection 8.

Quand il est en fonctionnement, le dispositif d'ionisation d'air 2, de préférence un réacteur à plasma non thermique, produit des décharges électriques dans l'air acheminé par la pompe 4 et la collision entre l'air et les électrons énergétiques contenus dans ces décharges forme des espèces métastables, des radicaux et des ions très réactifs, qui constituent des agents fortement réactifs promoteurs de réactions d'oxydation.

L'énergie injectée dans le réacteur plasma non-thermique est réalisée grâce à une alimentation haute tension préférentiellement impulsionnelle connectée au système d'électrodes du réacteur à ionisation de l'air (les anodes sont reliées à la haute tension). L'énergie nécessaire à la formation d'ozone est obtenue en modulant les paramètres électriques de cette alimentation, à savoir la tension, l'intensité et/ou la fréquence de répétition des impulsions (ou pulses) de courant.

Plus précisément, ces réactions d'oxydation se font par activation de l'oxygène atomique par les décharges électriques générées dans le dispositif d'ionisation 2 et conduisent à la formation d'ozone, oxydant très puissant et très réactif. Cet ozone, introduit dans la ligne d'échappement 9 par les moyens d'injection 8 peut alors oxyder les hydrocarbures notamment ceux de type méthanique pour former préférentiellement du dioxyde de carbone mais également du monoxyde de carbone. Il peut d'ailleurs également oxyder le monoxyde d'azote se trouvant dans les gaz d'échappement pour former du dioxyde d'azote

Lorsque le capteur de température 5 détecte une température inférieure à un certain seuil, par exemple inférieure à la température de demi-conversion du méthane, le calculateur 7 commande la mise en fonctionnement de la pompe à air 4 et du dispositif d'ionisation d'air 2. La température de demi-conversion du méthane est la température à laquelle la moitié du méthane est oxydée. Cette température est comprise entre 300 °C et 400 °C en fonction de la formulation catalytique du convertisseur catalytique 3.

Ainsi de l'ozone est produit et injecté dans la ligne d'échappement 9 via les moyens d'injection 8.

Lorsque le capteur de température 5 détecte une température supérieure au seuil précité, le calculateur 7 commande l'arrêt de la pompe à air 4 et l'arrêt du fonctionnement du dispositif d'ionisation d'air 2 par arrêt de l'alimentation électrique haute tension du réacteur à ionisation de l'air. Ainsi les hydrocarbures imbrûlés issus du moteur 1 sont oxydés dans le convertisseur catalytique 3 qui a atteint sa température d'amorçage.

La figure 2 est une variante de la figure 1 dans laquelle un dispositif d'ionisation de gaz 10 a été ajouté dans la ligne d'échappement 9 en amont des moyens d'injection 8, de manière à oxyder partiellement les hydrocarbures de type méthanique et le monoxyde d'azote. L'oxydation totale des composés ainsi obtenus est effectuée par l'ozone introduit dans la ligne d'échappement 9 par les moyens d'injection 8. L'utilisation couplée du dispositif d'ionisation d'air 2 et du dispositif d'ionisation de gaz 10 permet de réduire la consommation d'énergie de chacun de ces dispositifs. Différents modes de réalisation peuvent être envisagés. Le dispositif d'ionisation de gaz 10 peut être alimenté par la même alimentation électrique que le dispositif d'ionisation d'air 2 de manière à ce que les deux dispositifs fonctionnent dans les mêmes conditions. Il peut aussi être alimenté par une autre alimentation électrique de manière à ce que les deux dispositifs fonctionnent indépendamment l'un de l'autre.

On remarquera que sur cette figure 2, les moyens d'injection 8 ont été représentés en aval du convertisseur catalytique 3 mais ils pourraient aussi bien se trouver en amont de celui-ci. De même, dans le mode de réalisation de la figure 1, les moyens d'injection 8 auraient pu être représentés en aval du convertisseur catalytique 3.

L'invention présente donc l'avantage de traiter les hydrocarbures imbrûlés, notamment de type méthanique, même lorsque les gaz d'échappement sont froids.

Elle donne la possibilité de réduire la charge en métaux précieux du catalyseur trois voies.

Bien sûr d'autres modes de réalisation peuvent être envisagés.

Ainsi, le dispositif d'ionisation d'air 2 peut être composé de plusieurs réacteur à plasma non thermique disposés en série dans la ligne 6 de manière à réduire sa consommation électrique.

L'invention peut aussi s'appliquer à un moteur bi-carburation essence/gaz naturel.

Elle peut s'appliquer à un moteur atmosphérique ou turbocompressé.

## Revendications

1. Procédé de traitement des hydrocarbures imbrûlés de type méthanique, d'un moteur à allumage commandé fonctionnant au gaz naturel notamment pour véhicule automobile, **caractérisé en ce qu'**il consiste, en dessous d'un certain seuil de température des gaz circulant dans la ligne d'échappement du moteur, à ioniser lesdits gaz et à injecter dans la ligne d'échappement un mélange gazeux contenant de l'ozone afin d'oxyder ces hydrocarbures imbrûlés et, au-dessus de ce seuil, à traiter lesdits gaz, au moyen d'un convertisseur catalytique.

2. Procédé selon la revendication 1, **caractérisé en ce que** ledit seuil correspond à la température de demi-conversion du méthane.

3. Dispositif d'application du procédé selon l'une des revendications 1 ou 2, comportant au moins un convertisseur catalytique (3) dans la ligne d'échappement (9) du moteur, un capteur de température (5) en amont du convertisseur catalytique (3), une ligne d'admission d'air (6) parallèle à la ligne d'échappement (9) du moteur et comportant une pompe à air (4) et un dispositif d'ionisation d'air (2), des moyens d'injection (8) permettant d'introduire dans la ligne d'échappement (9) le mélange gazeux issu du dispositif d'ionisation d'air (2) **caractérisé en ce qu'**il comprend un dispositif d'ionisation des gaz (10) situé dans la ligne d'échappement en amont des moyens d'injection (8) ainsi que des moyens (7) de contrôle du fonctionnement de la pompe à air (4), du dispositif d'ionisation (2) et des moyens d'injection (8) en fonction de la température mesurée par le capteur (5).

4. Dispositif selon la revendication 3 **caractérisé en ce que** les moyens de contrôle (7) commandent la mise en fonctionnement de la pompe à air (4), du dispositif d'ionisation d'air (2) et des moyens d'injection (8), lorsque la température mesurée par le capteur (5) est en dessous d'un certain seuil.

5. Dispositif selon l'une des revendications 3 ou 4, **caractérisé en ce que** les moyens de contrôle (7) commandent l'arrêt de la pompe à air (4), du dispositif d'ionisation d'air (2) et des moyens d'injection (8) lorsque la température mesurée par le capteur (5) est au-dessus dudit seuil.

6. Dispositif selon l'une quelconque des revendications 3 à 5, **caractérisé en ce que** ledit seuil de température correspond à la température de demi-conversion du méthane.

7. Dispositif selon l'une des revendications 3 à 6, **caractérisé en ce que** les moyens d'injection (8) communiquent avec la ligne d'échappement (9), en amont du convertisseur catalytique (3).

8. Dispositif selon l'une des revendications 3 à 6, **caractérisé en ce que** les moyens d'injection (8) communiquent avec la ligne d'échappement (9), en aval du convertisseur catalytique (3).

9. Dispositif selon l'une des revendications 3 à 8, **caractérisé en ce que** le dispositif d'ionisation d'air (2) est constitué de plusieurs réacteurs placés en série dans la ligne d'admission d'air (6).

## Claims

1. Method for processing unburnt methane-type hydrocarbons, from a spark ignition engine running on natural gas, particularly for a motor vehicle, **characterised in that** it consists, below a certain temperature threshold of the gases flowing through the exhaust system of the engine, in ionising said gases and in injecting into the exhaust system a gas mixture containing ozone so as to oxidise these unburnt hydrocarbons and, above this threshold, in processing said gases by means of a catalytic converter.

2. Method according to Claim 1, **characterised in that** said threshold corresponds to the methane half-conversion temperature.

3. Device for applying the method according to one of Claims 1 or 2, comprising at least one catalytic converter (3) in the exhaust system (9) of the engine, a temperature sensor (5) upstream of the catalytic converter (3), an air inlet line (6) parallel with the exhaust system (9) of the engine and comprising an air pump (4) and an air ionisation device (2), injection means (8) allowing the gas mixture from the air ionisation device (2) to be introduced into the exhaust system (9) **characterised in that** it comprises a gas ionisation device (10) located in the exhaust system upstream of the injection means (8) as well as means (7) for monitoring the operation of the air pump (4), the ionisation device (2) and the injection means (8) as a function of the temperature measured by the sensor (5).

4. Device according to Claim 3 **characterised in that** the monitoring means (7) command the starting of the air pump (4), the air ionisation device (2) and the injection means (8), when the temperature measured by the sensor (5) is below a certain threshold.

5. Device according to one of Claims 3 or 4, **characterised in that** the monitoring means (7) command the stopping of the air pump (4), the air ionisation device (2) and the injection means (8) when the temperature measured by the sensor (5) is above said threshold.

6. Device according to any one of Claims 3 to 5, **characterised in that** said temperature threshold corresponds to the methane half-conversion temperature.

7. Device according to one of Claims 3 to 6, **characterised in that** the injection means (8) communicate with the exhaust system (9), upstream of the catalytic converter (3).

8. Device according to one of Claims 3 to 8, **characterised in that** the injection means (8) communicate with the exhaust system (9), downstream from the catalytic converter (3).

9. Device according to one of Claims 3 to 8, **characterised in that** the air ionisation device (2) is constituted by several reactors placed in series in the air inlet line (6).

## Patentansprüche

1. Verfahren zur Behandlung der unverbrannten Kohlenwasserstoffe vom Methan-Typ eines mit Erdgas betriebenen fremdgezündeten Verbrennungsmotors insbesondere für ein Kraftfahrzeug, **dadurch gekennzeichnet, dass** es darin besteht, die in der Abgasleitung des Motors zirkulierenden Gase zu ionisieren und ein Ozon enthaltendes Gasgemisch in die Abgasleitung zu spritzen, um die unverbrannten Kohlenwasserstoffe zu oxidieren, wenn die Temperatur der Gase unter einem bestimmten Grenzwert liegt, und die Gase mittels eines Katalysators zu behandeln, wenn ihre Temperatur über diesem Grenzwert liegt.

2. Verfahren nach Anspruch 1, **dadurch gekennzeichnet, dass** der Grenzwert der Temperatur der halben Umwandlung des Methans entspricht.

3. Vorrichtung zur Anwendung des Verfahrens nach Anspruch 1 oder 2 mit mindestens einem Katalysator (3) in der Abgasleitung (9) des Motors, einem Temperatursensor (5) stromaufwärts des Katalysators (3), einer zur Abgasleitung (9) des Motors parallelen Luftzufuhr-Leitung (6) mit einer Luftpumpe (4) und einer Vorrichtung (2) zur Ionisation von Luft, wobei das aus der Luftionisations-Vorrichtung (2) kommende Gasgemisch von Einspritzmitteln (8) in die Abgasleitung (9) geführt werden kann, **dadurch gekennzeichnet, dass** sie eine Gasionisationsvorrichtung (10) in der Abgasleitung stromaufwärts der Einspritzmittel (8) sowie Mittel (7) zur Kontrolle der Funktion der Luftpumpe (4), der Ionisations-Vorrichtung (2) und der Einspritzmittel (8) abhängig von der vom Sensor (5) gemessenen spritzmittel (8) abhängig von der vom Sensor (5) gemessenen Temperatur aufweist.

4. Vorrichtung nach Anspruch 3, **dadurch gekennzeichnet, dass** die Kontrollmittel (7) für die Inbetriebnahme der Luftpumpe (4), der Luftionisations-Vorrichtung (2) und der Einspritzmittel (8) sorgen, wenn die vom Sensor (5) gemessene Temperatur einen bestimmten Grenzwert unterschreitet.

5. Vorrichtung nach einem der Ansprüche 3 oder 4,**dadurch gekennzeichnet, dass** die Kontrollmittel (7) für das Anhalten der Luftpumpe (4), der Luftionisations-Vorrichtung (2) und der Einspritzmittel (8) sorgen, wenn die vom Sensor (5) gemessene Temperatur den Grenzwert übersteigt.

6. **Vorrichtung nach einem der Ansprüche 3 bis 5, dadurch gekennzeichnet, dass** der Grenzwert der Temperatur der halben Umwandlung des Methans entspricht.

7. Vorrichtung nach einem der Ansprüche 3 bis 6, **dadurch gekennzeichnet, dass** die Einspritzmittel (8) stromaufwärts des Katalysators (3) mit der Abgasleitung (9) in Verbindung stehen.

8. Vorrichtung nach einem der Ansprüche 3 bis 6, **dadurch gekennzeichnet, dass** die Einspritzmittel (8) stromabwärts des Katalysators (3) mit der Abgasleitung (9) in Verbindung stehen.

9. Vorrichtung nach einem der Ansprüche 3 bis 8, **dadurch gekennzeichnet, dass** die Luftionisations-Vorrichtung (2) aus mehreren Reaktoren besteht, die in der Luftzufuhr-Leitung (6) in Reihe geschaltet sind.
